# EUROPÄISCHE PATENTSCHRIFT

(11) **EP 1 950 438 B1**
(45) Veröffentlichungstag und Bekanntmachung des Hinweises auf die Patenterteilung: **14.11.2012**
(21) Anmeldenummer: 08000759.4
(22) Anmeldetag: 16.01.2008
(51) Int. Cl.: F16D 3/77, F16D 1/10

(54) **Antriebssystem ein Fahrzeug**
Transmission system for a motor vehicle
Système d'entraînement pour un véhicule

(30) Priorität: 27.01.2007 DE 102007004203
(43) Veröffentlichungstag der Anmeldung: 30.07.2008
(73) Patentinhaber: ZF Friedrichshafen AG, 88038 Friedrichshafen (DE)
(72) Erfinder: Frey, Peter, 97447 Gerolzhofen (DE); Kühner, Michael, 97523 Schwanfeld (DE); Markow, Alexander, 97424 Schweinfurt (DE); Heuler, Michael, 97080 Würzburg (DE); Grumbach, Martin, 88178 Heimenkirch (DE); Sich, Bernhard, 88045 Friedrichshafen (DE); Reiser, Robert, 78359 Nenzingen (DE); Hammer, Peter, 97421 Schweinfurt (DE)

(56) Entgegenhaltungen:
- EP-A1- 0 610 979
- WO-A2-2007/000151
- DE-A1- 19 950 597
- DE-A1-102005 037 514
- US-A- 4 502 279
- US-A- 5 234 278

## Beschreibung

Die vorliegende Erfindung betrifft ein Antriebssystem für ein Fahrzeug. Ein derartiges Antriebssystem umfasst im Allgemeinen ein Antriebsaggregat mit einer Antriebswelle sowie eine Drehmomentübertragungsbaugruppe, welche antriebsseitig mit der Antriebswelle des Antriebsaggregats zur Drehung um eine Drehachse zu koppeln ist und welche abtriebsseitig mit einem Getriebe zu koppeln ist.

Durch die DE 10 2005 037 514 A1 ist ein Antriebssystem für ein Fahrzeug bekannt, das ein Antriebsaggregat mit einer Antriebswelle sowie eine Drehmomentübertragungsbaugruppe aufweist, welche antriebsseitig mit der Antriebswelle des Antriebsaggregats zur Drehung um eine Drehachse zu koppeln ist, und welche abtriebsseitig mit einem Getriebe zu koppeln ist. Die Drehmomentübertragungsbaugruppe weist einen Torsionsschwingungsdämpfer auf, der mittels eines antriebsseitigen Flansches drehfest an der Antriebswelle des Antriebsaggregats montiert ist, und eine Reibungskupplung, die mittels einer zentralen Druckplatte über eine Lagerung auf einem Träger des Getriebes axial festgelegt ist, wobei die Reibungskupplung beidseits der zentralen Druckplatte über Kupplungsscheiben verfügt, von denen jede mit je einer Welle des Getriebes drehfest verbunden ist. Die Kopplung des Torsionsschwingungsdämpfers mit der Reibungskupplung erfolgt mittels einer Axialsteckverbindungsanordnung, indem sowohl an einer Nabenscheibe des Torsionsschwingungsdämpfers als auch an einem Gehäuse der Reibungskupplung jeweils eine Steckverbindungsbaugruppe vorgesehen ist, und diese Steckverbindungsbaugruppen durch Axialsteckverbindung in Drehkopplungseingriff miteinander bringbar sind.

Bei der bekannten Drehmomentübertragungsbaugruppe ist zwar der Torsionsschwingungsdämpfer am Antrieb und die Reibungskupplung am Getriebe jeweils in axialer Richtung abgestützt, jedoch muss damit gerechnet werden, dass aufgrund eines Lagerspiels zwischen der zentralen Druckplatte und dem Träger des Getriebes sowie aufgrund von Elastizitäten im Gehäuse der Reibungskupplung undefinierte axiale Relativbewegungen zwischen dem Torsionsschwingungsdämpfer und der Reibungskupplung auftreten, und zwar insbesondere beim Ein- oder Ausrückvorgang.

Des weiteren ist es bekannt, in Antriebssträngen von Fahrzeugen die Kopplung zwischen einer Antriebswelle eines Antriebsaggregats, also beispielsweise einer Kurbelwelle einer Brennkraftmaschine, und einer Drehmomentübertragungsbaugruppe, wie z.B. einem hydrodynamischen Drehmomentwandler oder einer Reibungskupplung, unter Einsatz einer Schraubverbindung zu realisieren. Es werden beispielsweise so genannte Flexplatten eingesetzt, die im Allgemeinen radial innen an die Antriebswelle angeschraubt werden und radial außen an die Drehmomentübertragungsbaugruppe angebunden werden, beispielsweise ebenfalls angeschraubt werden. Auf diese Art und Weise wird nicht nur eine Drehkopplung zwischen der Antriebswelle und der Drehmomentübertragungsbaugruppe realisiert. Vielmehr wird auch eine axiale Halterung für die Drehmomentübertragungsbaugruppe bezüglich der Antriebswelle bzw. des Antriebsaggregats realisiert. Der Nachteil derartiger Schraubverbindungen ist, dass die Bereiche, in welchen die dazu eingesetzten Schraubelemente im Allgemeinen angeordnet sind, nur vergleichsweise schwierig zu erreichen sind, was den Montageaufwand erhöht und oftmals den Einsatz von aufwendigem Spezialwerkzeug erforderlich macht.

Aus der DE 199 25 913 A1 ist ein Antriebssystem bekannt, bei welchem die Verbindung zwischen einer Antriebswelle und einem als Drehmomentübertragungsbaugruppe eingesetzten hdydrodynamischen Drehmomentwandler durch axiales Ineinandereinstecken zweier Steckverbindungsanordnungen erfolgt. Eine davon ist an der Antriebswelle festgelegt. Die andere Steckverbindungsanordnung ist an dem Wandlergehäuse vorgesehen. Durch axiales Heranführen des Wandlergehäuses an die an der Antriebswelle festgelegte Steckverbindungsanordnung wird ein Verzahnungseingriff realisiert, welcher die Übertragung von Drehmomenten ermöglicht. Um diesen Eingriff beizubehalten und somit auch eine definierte axiale Positionierung der Drehmomentübertragungsbaugruppe bezüglich der Antriebswelle sicherzustellen, wirkt eine Axialhalteanordnung zwischen der an der Antriebswelle festgelegten Steckverbindungsanordnung und der Drehmomentübertragungsbaugruppe. Diese Anordnung umfasst einen Schraubring, welcher radial außen auf die an der Antriebswelle festgelegte Steckverbindungsanordnung aufgeschraubt wird und mit nach radial innen greifenden Bereichen einen Vorsprung am Wandlergehäuse hintergreift.

Es ist die Aufgabe der vorliegenden Erfindung, ein Antriebssystem für ein Fahrzeug vorzusehen, welches bei einfachem Aufbau und einfacher Montierbarkeit eine zuverlässige Kopplung und Positionierung der verschiedenen in die Drehmomentübertragung involvierten Baugruppen sicherstellt.

Erfindungsgemäß wird diese Aufgabe gelöst durch ein Antriebssystem für ein Fahrzeug, umfassend ein Antriebsaggregat mit einer Antriebswelle sowie eine Drehmomentübertragungsbaugruppe, welche antriebsseitig mit der Antriebswelle des Antriebsaggregats zur Drehung um eine Drehachse zu koppeln ist und welche abtriebsseitig mit einem Getriebe zu koppeln ist, wobei die antriebsseitige Kopplung durch eine Axialsteckverbindungsanordnung erfolgt und wobei die Drehmomentübertragungsbaugruppe an dem Getriebe in wenigstens einer axialen Richtung abgestützt ist.

Die Drehmomentübertragungsbaugruppe kann an dem Getriebe in Richtung von der Antriebswelle weg axial abgestützt sein und durch eine Vorspannanordnung in Richtung dieser axialen Abstützung vorgespannt sein. Dies ermöglicht den Einsatz relativ einfach aufgebauter Axialabstützlager, die beispielsweise nur auf Druck belastbar sein müssen.

Die Vorspannanordnung kann beispielsweise eine zwischen der Antriebswelle und der Drehmomentübertragungsbaugruppe wirkende Federanordnung umfassen.

Es kann vorgesehen sein, dass die Axialsteckverbindungsanordnung eine erste Steckverbindungsbaugruppe umfasst, die mit der Antriebswelle drehfest zu verbinden ist, und eine zweite Steckverbindungsbaugruppe umfasst, die durch Axialsteckverbindung in Drehkopplungseingriff mit der ersten Steckverbindungsbaugruppe bringbar ist und die mit der Drehmomentübertragungsbaugruppe drehfest verbunden ist.

Eine zuverlässige Drehmomentübertragungsfunktionalität der beiden Steckverbindungsbaugruppen kann dadurch erlangt werden, dass die erste Steckverbindungbaugruppe und die zweite Steckverbindungbaugruppe durch eine Radialabstützanordnung radial aneinander abgestützt sind.

Dabei kann beispielsweise die Radialabstützanordnung eine Außenumfangsfläche an der ersten Steckverbindungsbaugruppe umfassen, an welcher die zweite Steckverbindungsbaugruppe mit ihrem radial inneren Bereich abgestützt oder abstützbar ist.

Bei einer auf Grund der definierten Positionierung und der Optimierung der Achsausrichtung besonders vorteilhaften Ausgestaltungsform wird vorgeschlagen, dass die Antriebswelle eine zentrale Aussparung aufweist, in welche ein axialer Fortsatz der Drehmomentübertragungsbaugruppe eingreift, wobei die Vorspannanordnung sich an der Antriebswelle im Bereich der Aussparung abstützt und den axialen Fortsatz der Drehmomentübertragungsbaugruppe beaufschlagt.

Die in dem erfindungsgemäßen Antriebssystem eingesetzte Drehmomentübertragungsbaugruppe kann beispielsweise einen hydrodynamischen Drehmomentwandler umfassen.

Die vorliegende Erfindung wird nachfolgend mit Bezug auf die beiliegenden Zeichnungen detailliert beschrieben. Es zeigt:

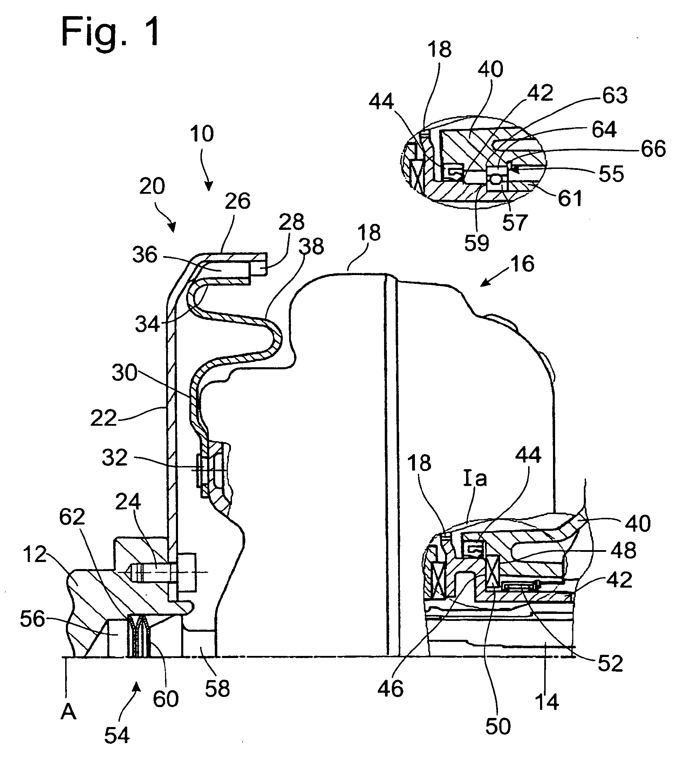

- Fig. 1: eine Teil-Längsschnittansicht eines erfindungsgemäß aufgebauten Antriebssystems mit seinen wesentlichen Komponenten;
- Fig. 1 a: das in Fig. 1 umrandete Detail la in abgewandelter Ausgestaltungsform;
- Fig. 2: eine der Fig. 1 entsprechende Ansicht einer alternativen Ausgestaltungsform;
- Fig. 3: eine weitere der Fig. 1 entsprechende Darstellung einer alternativen Ausgestaltungsform.

In Fig. 1 ist in teilweise schematischer Darstellung ein Antriebssystem 10 für ein Fahrzeug dargestellt. Dieses Antriebssystem 10 umfasst als wesentliche Komponenten bzw. Baugruppen eine Antriebswelle 12 eines nicht weiter dargestellten Antriebsaggregats. Dieses Antriebsaggregat kann als Brennkraftmaschine ausgebildet sein, wobei dann die Antriebswelle 12 die Kurbelwelle bilden kann. Abtriebsseitig umfasst das Antriebssystem 10 eine Getriebeeingangswelle 14 eines Getriebes. Das Drehmoment wird zwischen der Antriebswelle 12 und der Getriebeeingangswelle 14 durch eine Drehmomentübertragungsbaugruppe 16 übertragen, die im dargestellten Beispiel als hydrodynamischer Drehmomentwandler aufgebaut ist. Eingangsseitig, also mit dem Wandlergehäuse 18, ist diese Drehmomentübertragungsbaugruppe 16 durch eine Axialsteckverbindungsanordnung 20 mit der Antriebswelle 12 zur Drehung um die Drehachse A gekoppelt bzw. zu koppeln.

Die Axialsteckverbindungsanordnung 20 umfasst eine erste Steckverbindungsbaugruppe 22, die im Wesentlichen plattenartig ausgebildet ist und radial innen durch eine Mehrzahl von Schraubbolzen 24 an die Antriebswelle 12 fest angebunden ist. Radial außen ist die beispielsweise durch Umformen eines Blechrohlings gebildete erste Steckverbindungsbaugruppe 22 axial abgekröpft und bildet in einem näherungsweise zylindrischen bzw. axial sich erstreckenden Abschnitt 26 eine Innenverzahnung 28.

Die Axialsteckverbindungsanordnung 20 umfasst weiterhin eine zweite Steckverbindungsbaugruppe 30. Diese beispielsweise ebenfalls durch Umformen eines Blechrohlings gebildete zweite Steckverbindungsbaugruppe ist radial innen durch beispielsweise an dem Wandlergehäuse 18 integral ausgebildete Nietabschnitte 32 mit dem Wandlergehäuse 18 und somit der Drehmomentübertragungsbaugruppe 16 verbunden. Radial außen weist die zweite Steckverbindungsbaugruppe 30 in einem näherungsweise axial sich erstreckenden Abschnitt 34 eine Außenverzahnung 36 auf. Diese steht in Kämmeingriff mit der Innenverzahnung 28 der ersten Steckverbindungsbaugruppe 22. Dieser Kämmeingriff wird durch axiales Ineinandereinstecken bzw. -einführen der beiden Steckverbindungsbaugruppen 22, 30 hergestellt.

Zwischen ihrem radial äußeren Bereich und ihrem radial inneren Bereich weist die zweite Steckverbindungsbaugruppe 30 einen ondulierten Abschnitt 38 auf, so dass durch die in radialer Richtung auch gewellte Form eine radiale und auch eine axiale Elastizität vorhanden ist. Auf diese Art und Weise wird es möglich, durch radiale Vorspannung die beiden Verzahnungen 28, 36 fest in Kämmeingriff miteinander zu halten.

Es sei hier darauf hingewiesen, dass die zweite Steckverbindungsbaugruppe 30 in ihrem mit ondulierter Formgebung ausgebildeten Bereich 38 und auch im radial äußeren bzw. axial sich erstreckenden Abschnitt 34 nicht notwendigerweise ringscheibenartig ausgebildet sein muss, sondern einzelne nach radial außen sich erstreckende Armabschnitte aufweisen kann, wobei jeder dieser Armabschnitte einen oder mehrere der Zähne der Verzahnung 36 tragen kann.

Durch die beiden Verzahnungen 28, 36 bzw. die beiden Steckverbindungsbaugruppen 22, 30 wird also eine drehfeste Verbindung zwischen der Antriebswelle 12 und der Drehmomentübertragungsbaugruppe 16 hergestellt. Um für die Drehmomentübertragungsbaugruppe 16 dann auch eine definierte axiale Positionierung vorzugeben, ist diese, wie im Folgenden dargelegt, axial am Getriebe bzw. einem Getriebegehäuse 40 desselben abgestützt. Es wird hierzu im Folgenden auf den in der Fig. 1 rechts unten dargestellten vergrößerten und im Schnitt gezeigten Ausschnitt Bezug genommen.

Man erkennt das Getriebegehäuse 40, in welches das hier im Schnitt dargestellte Wandlergehäuse 18 mit seinem radial inneren und beispielsweise als Pumpennabe 42 ausgebildeten Bereich eingreift. Durch ein Dichtungselement 44 ist ein fluiddichter Abschluss zwischen dieser Pumpennabe 42 bzw. dem Wandlergehäuse 18 einerseits und dem Getriebegehäuse 40 andererseits realisiert. An zwei sich axial einander gegenüber liegenden Stirnflächen 46, 48 der Pumpennabe 42 bzw. des Wandlergehäuses 18 einerseits und des Getriebegehäuses 40 andererseits ist ein Axiallager 50 axial abgestützt, wobei über dieses Axiallager 50 dann die Drehmomentübertragungsbaugruppe 16 axial am Getriebe bzw. am Getriebegehäuse 40 abgestützt ist, und zwar in Richtung von der Antriebswelle 12 weg. Ein zwischen dem Getriebegehäuse 40 und der Pumpennabe 42 positioniertes Radialllager 52 sorgt an dieser axialen Seite der Drehmomentübertragungsbaugruppe 16 weiterhin für die definierte radiale Positionierung derselben bezüglich des Getriebegehäuses 40.

Es sei hier darauf hingewiesen, dass die beiden Lager 50, 52 selbstverständlich als Wälzkörperlager oder auch als Gleitlager ausgebildet sein können.

Um die definierte und durch einseitige axiale Abstützung der Drehmomentübertragungsbaugruppe 16 am Getriebegehäuse 40 erlangte Positionierung der Drehmomentübertragungsbaugruppe 16 im gesamten Antriebssystem 10 beizubehalten, ist dieses durch eine allgemein mit 54 bezeichnete Vorspannanordnung axial in Richtung dieser axialen Abstützung vorgespannt. Man erkennt, dass in der Antriebswelle 12 eine axial offene Einsenkung bzw. Aussparung 56 ausgebildet ist, in welche ein Zentrierfortsatz 58 der Drehmomentübertragungsbaugruppe 16 axial eingreift. Auf diese Art und Weise ist an dieser axialen Seite der Drehmomentübertragungsbaugruppe 16 weiterhin eine definierte radiale Positionierung für die Drehmomentübertragungsbaugruppe 16 bezüglich der Antriebswelle 12 und der Drehachse A vorgegeben. Die Vorspannanordnung 54 umfasst im dargestellten Beispiel eine Mehrzahl von axial gestapelten Tellerfedern 60, die sich an einem Bodenbereich bzw. einer Schulter 62 in der Aussparung 56 einerseits und an einer Stirnfläche 64 des Zentrierfortsatzes 58 andererseits abstützen. Durch diese Vorspannanordnung 54 wird also eine axial gerichtete Kraft erzeugt, welche für eine definierte Positionierung bzw. axiale Abstützung der Drehmomentübertragungsbaugruppe 16 über das Axiallager 50 am Getriebe bzw. am Getriebegehäuse 40 sorgt.

Man erkennt, dass bei dem erfindungsgemäß aufgebauten Antriebssystem 10 also eine definierte Trennung der Funktionalität Drehkopplung einerseits und Axialpositionierung bzw. Axialhalterung andererseits erfolgt. Dies ermöglicht es, insbesondere die Axialsteckverbindungsanordnung 20 so auszugestalten, wie dies zur Erfüllung der Drehmomentübertragungskopplung einerseits und zum Ermöglichen einer Elastizität zum Kompensieren von Achsversätzen bzw. Taumelbewegungen andererseits vorteilhaft ist.

Eine Abwandlung insbesondere hinsichtlich der axialen Abstützung der Drehmomentübertragungsbaugruppe 16 ist in Fig. 1a gezeigt. Man erkennt hier den Bereich der axialen Abstützung des Wandlergehäuses 18 bzw. der Pumpennabe 42 am Getriebegehäuse 40. Ein als Kugellager ausgebildetes Wälzkörperlager 55 dient hier sowohl zur radialen als auch zur axialen Abstützung, und zwar axial in beiden axialen Richtungen. Man erkennt, dass ein innerer Lagerring 57 an einer Radialschulter 59 der Pumpennabe 42 in einer axialen Richtung abgestützt bzw. gehaltert ist. Eine auf die Pumpennabe 42 aufgeschobene Fixierhülse 61 sorgt für die axiale Halterung des Lagerrings 57 bezüglich der Pumpennabe 42 in der anderen axialen Richtung. In entsprechender Weise ist am Getriebegehäuse 40 eine Radialschulter 63 vorgesehen, an welcher ein äußerer Lagerring 64 des Lagers 55 in einer axialen Richtung abgestützt ist. Ein Sicherungsring 66 sorgt für die axiale Abstützung bzw. Halterung des äußeren Lagerrings 64 bezüglich des Getriebegehäuses 40 in der anderen axialen Richtung. Auf diese Art und Weise ist also die Pumpennabe 42 und mithin die gesamte Drehmomentübertragungsbaugruppe 16 in beiden axialen Richtungen an dem Getriebegehäuse 40 und somit dem Getriebe gestützt und gelagert. Die zusätzliche axiale Vorspannung, wie sie in Fig. 1 gezeigt ist, ist dann nicht erforderlich.

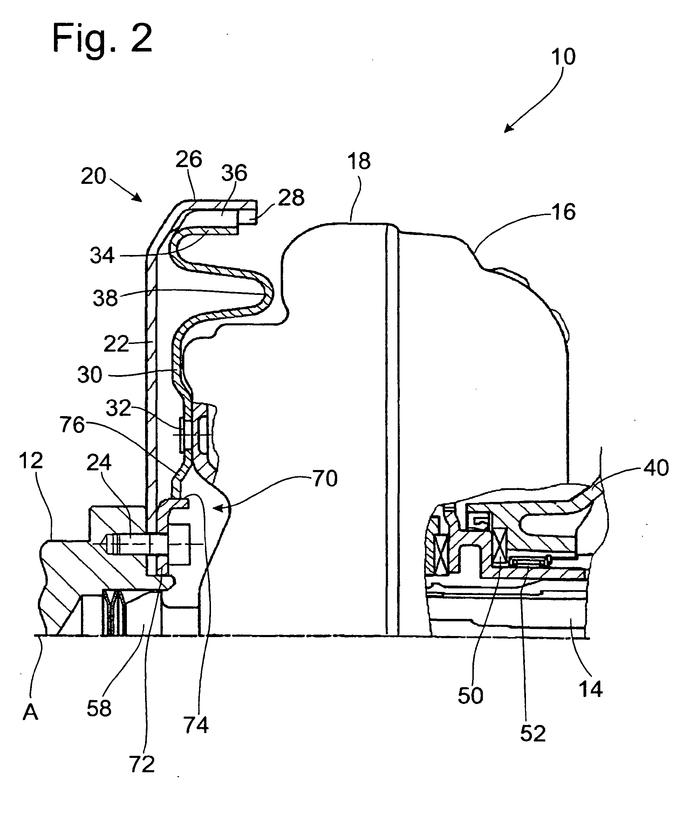

Eine alternative Ausgestaltungsform ist in Fig. 2 gezeigt. Man erkennt in Fig. 2, dass die Axialsteckverbindungsanordnung 20 zusätzlich auch die Funktionalität der radialen Abstützung bzw. Zentrierung des Wandlergehäuses 18 bzw. der Drehmomentübertragungsbaugruppe 16 an ihrer der Antriebswelle 12 zugewandten Seite übernimmt. Zu diesem Zwecke bildet die Axialsteckverbindungsanordnung 20 eine Radialabstützanordnung 70. Diese umfasst ein ringartiges Abstützelement 72, das durch die Schraubbolzen 24 an der Antriebswelle 12 festgelegt ist. Das Abstützelement 72 stellt eine Außenumfangsfläche 74 bereit, an welcher ein nach radial innen über die Nietverbindung mit dem Wandlergehäuse 18 sich hinaus erstreckender radial innerer Endbereich 76 der zweiten Steckverbindungsbaugruppe 30 radial abgestützt bzw. abstützbar ist.

Durch diese zusätzliche radiale Abstützung kann beispielsweise auf eine entsprechende Funktionalität im Bereich des Fortsatzes 58 verzichtet werden. Insbesondere ist diese Ausgestaltungsform vorteilhaft in Verbindung mit der in der Fig. 1 a gezeigten Art und Weise der Axialabstützung, da dann der Fortsatz 58, über den auch die axiale Vorspannung erfolgt, überhaupt nicht erforderlich ist.

Es sei hierzu noch ausgeführt, dass die Radialabstützanordnung bzw. die Außenumfangsfläche 74 derselben auch bereitgestellt sein kann als integraler Bestandteil der ersten Steckverbindungsbaugruppe, nämlich durch das Ausbilden axialer Ausbiegungen bzw. Zungen. Auch andere Formationen, wie z.B. axiale Absätze oder Stufen, können zum Bereitstellen einer derartigen Außenumfangsfläche genutzt werden.

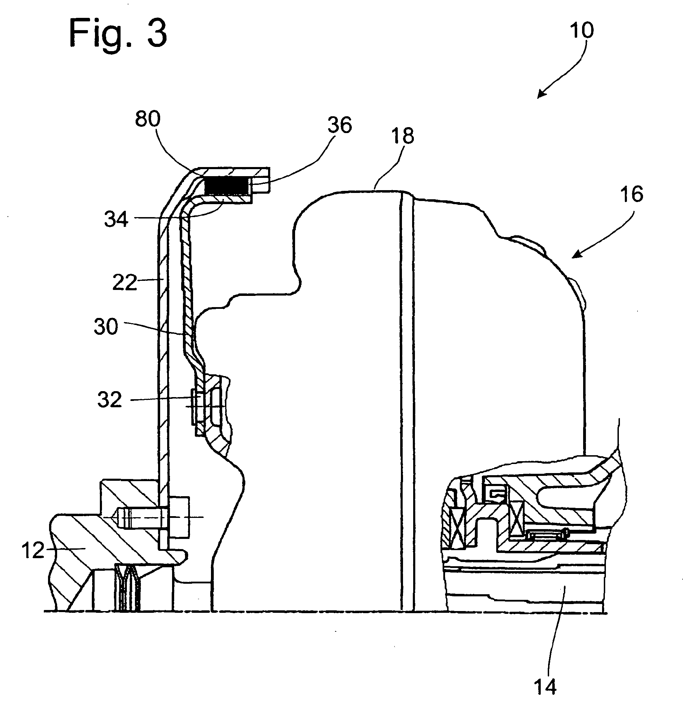

Eine weitere alternative Ausgestaltungsform ist in Fig. 3 gezeigt. Diese unterscheidet sich von den vorangehend Beschriebenen primär dadurch, dass die zweite Steckverbindungsbaugruppe 30 ohne den wellenartigen bzw. ondulierten Abschnitt 38 ausgebildet ist. Vielmehr ist die zweite Steckverbindungsanordnung 30 zwischen ihrem radial inneren Bereich, in welchem sie durch die Nietabschnitte 32 an dem Wandlergehäuse 18 festgelegt ist, und ihrem radial äußeren, im Wesentlichen axial sich erstreckenden Abschnitt 34 sich näherungsweise geradlinig erstreckend ausgebildet. Um gleichwohl die vorteilhafte radiale Elastizität bereitzustellen, ist die Verzahnung 36 der zweiten Steckverbindungsbaugruppe 30 mit einem elastischen Überzug, beispielsweise einer Gummimateriallage oder dergleichen, überzogen. Auf diese Art und Weise sind die beiden Steckverbindungsbaugruppen 22, 30 radial elastisch miteinander gekoppelt, so dass durch entsprechende Vorspannung ein stabiler Drehmitnahmeeingriff realisiert ist.

Es sei abschließend noch darauf hingewiesen, dass die Ausgestaltung der Drehmomentübertragungsbaugruppe 16 als hydrodynamischer Drehmomentwandler vorangehend nur beispielhaft verwendet wurde. Es ist selbstverständlich auch möglich, die Erfindunsprinzipien anzuwenden bei einer in anderer Art und Weise aufgebauten bzw. wirksamen Drehmomentübertragungsbaugruppe. Beispielsweise könnte eine Fluidkupplung, eine nasslaufende Reibungskupplung, eine trockenlaufende Reibungskupplung oder ein Zweimassenschwungrad oder dergleichen unter Verwendung der gleichen, vorangehend beschriebenen Erfindungsprinzipien in ein Fahrzeug bzw. einen Anrtriebsstrang eines Fahrzeugs eingegliedert werden, um ein erfindungsgemäßes Antriebssystem bereitzustellen.

## Patentansprüche

1. Antriebssystem für ein Fahrzeug, umfassend ein Antriebsaggregat mit einer Antriebswelle (12) sowie eine Drehmomentübertragungsbaugruppe (16), welche antriebsseitig mit der Antriebswelle (12) des Antriebsaggregats zur Drehung um eine Drehachse (A) zu koppeln ist und welche abtriebsseitig mit einem Getriebe (40) zu koppeln ist, wobei die antriebsseitige Kopplung durch eine Axialsteckverbindungsanordnung (20) erfolgt und wobei die Drehmomentübertragungsbaugruppe (16) an dem Getriebe (40) in wenigstens einer axialen Richtung abgestützt ist, **dadurch gekennzeichnet, dass** die Drehmomentübertragungsbaugruppe (16) an dem Getriebe (40) in Richtung von der Antriebswelle (12) weg axial abgestützt ist und durch eine Vorspannanordnung (54) in Richtung der axialen Abstützung vorgespannt ist.

2. Antriebssystem nach Anspruch 1, mit einer Axialsteckverbindungsanordnung (20), die eine erste Steckverbindungsbaugruppe (22) umfasst, die mit der Antriebswelle (12) drehfest zu verbinden ist, und eine zweite Steckverbindungsbaugruppe (30) umfasst, die durch Axialsteckverbindung in Drehkopplungseingriff mit der ersten Steckverbindungsbaugruppe (22) bringbar ist und die mit der Drehmomentübertragungsbaugruppe (16) drehfest verbunden ist, **dadurch gekennzeichnet, dass** die erste Steckverbindungbaugruppe (22) und die zweite Steckverbindungbaugruppe (30) durch eine Radialabstützanordnung (70) radial aneinander abgestützt sind.

3. Antriebssystem nach Anspruch 2,
**dadurch gekennzeichnet, dass** die Radialabstützanordnung (70) eine Außenumfangsfläche (74) an der ersten Steckverbindungsbaugruppe (22) umfasst, an welcher die zweite Steckverbindungsbaugruppe (30) mit ihrem radial inneren Bereich (76) radial abgestüzt oder abstützbar ist.

4. Antriebssystem nach Anspruch 1,
**dadurch gekennzeichnet, dass** die Vorspannanordnung (54) eine zwischen der Antriebswelle (12) und der Drehmomentübertragungsbaugruppe (16) wirkende Federanordnung (60) umfasst.

5. Antriebssystem nach Anspruch 4,
**dadurch gekennzeichnet, dass** die Antriebswelle (12) eine zentrale Aussparung (56) aufweist, in welche ein axialer Fortsatz (58) der Drehmomentübertragungsbaugruppe (16) eingreift, wobei die Vorspannanordnung (54) sich an der Antriebswelle (12) im Bereich der Aussparung (56) abstützt und den axialen Fortsatz (58) der Drehmomentübertragungsbaugruppe (16) beaufschlagt.

## Claims

1. Drive system for a vehicle, comprising a drive unit with a drive shaft (12) and also a torque-transmitting assembly (16) which can be coupled at the drive input side to the drive shaft (12) of the drive unit for rotation about an axis of rotation (A) and which can be coupled at the drive output side to a gearbox (40), wherein the drive-input-side coupling is realized by means of an axial plug connection arrangement (20) and wherein the torque-transmitting assembly (16) is supported on the gearbox (40) in at least one axial direction, **characterized in that** the torque-transmitting assembly (16) is supported axially on the gearbox (40) in a direction away from the drive shaft (12) and is preloaded in the direction of the axial support by a preload arrangement (54).

2. Drive system according to Claim 1, having an axial plug connection arrangement (20) which comprises a first plug connection assembly (22), which can be connected rotationally conjointly to the drive shaft (12), and a second plug connection assembly (30), which can be placed in rotationally coupled engagement with the first plug connection assembly (22) by means of axial plug connection and which is connected rotationally conjointly to the torque-transmitting assembly (16), **characterized in that** the first plug connection assembly (22) and the second plug connection assembly (30) are supported radially against one another via a radial support arrangement (70).

3. Drive system according to Claim 2,
**characterized in that** the radial support arrangement (70) comprises an outer circumferential surface (74) on the first plug connection assembly (22), against which outer circumferential surface the second plug connection assembly (30) is or can be radially supported via its radially inner region (76).

4. Drive system according to Claim 1,
**characterized in that** the preload arrangement (54) comprises a spring arrangement (60) which acts between the drive shaft (12) and the torque-transmitting assembly (16).

5. Drive system according to Claim 4,
**characterized in that** the drive shaft (12) has a central cutout (56) into which an axial projection (58) of the torque-transmitting assembly (16) engages, wherein the preload arrangement (54) is supported on the drive shaft (12) in the region of the cutout (56) and exerts a load on the axial projection (58) of the torque-transmitting assembly (16).

## Revendications

1. Système d'entraînement pour un véhicule, comprenant un groupe d'entraînement avec un arbre d'entraînement (12) ainsi qu'un module de transfert de couple (16) qui peut être accouplé du côté de l'entraînement à l'arbre d'entraînement (12) du groupe d'entraînement de manière à tourner autour d'un axe de rotation (A), et qui peut être accouplé du côté de la sortie à une boîte de vitesses (40), l'accouplement du côté de l'entraînement s'effectuant par le biais d'un agencement de liaison par enfichage axial (20) et le module de transfert de couple (16) étant supporté sur la boîte de vitesses (40) dans au moins une direction axiale, **caractérisé en ce que** le module de transfert de couple (16) est supporté axialement sur la boîte de vitesses (40) dans la direction s'écartant de l'arbre d'entraînement (12) et est précontraint par un agencement de précontrainte (54) dans la direction du support axial.

2. Système d'entraînement selon la revendication 1, comprenant un agencement de liaison par enfichage axial (20) qui comprend un premier module de liaison par enfichage (22) qui peut être relié de manière solidaire en rotation à l'arbre d'entraînement (12) et qui comprend un deuxième module de liaison par enfichage (30) qui peut être amené en prise d'accouplement en rotation par liaison par enfichage axial avec le premier module de liaison par enfichage (22) et qui est connecté de manière solidaire en rotation au module de transfert de couple (16), **caractérisé en ce que** le premier module de liaison par enfichage (22) et le deuxième module de liaison par enfichage (30) sont supportés radialement l'un contre l'autre par un agencement de support radial (70).

3. Système d'entraînement selon la revendication 2, **caractérisé en ce que** l'agencement de support radial (70) comprend une surface périphérique extérieure (74) sur le premier module de liaison par enfichage (22), sur laquelle le deuxième module de liaison par enfichage (30) est supporté radialement ou peut être supporté radialement avec sa région radialement interne (76).

4. Système d'entraînement selon la revendication 1, **caractérisé en ce que** l'agencement de précontrainte (54) comprend un agencement de ressort (60) agissant entre l'arbre d'entraînement (12) et le module de transfert de couple (16).

5. Système d'entraînement selon la revendication 4, **caractérisé en ce que** l'arbre d'entraînement (12) présente un évidement central (56) dans lequel s'engage une saillie axiale (58) du module de transfert de couple (16), l'agencement de précontrainte (54) s'appuyant contre l'arbre d'entraînement (12) dans la région de l'évidement (56) et sollicitant la saillie axiale (58) du module de transfert de couple (16).
